# EUROPÄISCHE PATENTSCHRIFT

(11) **EP 3 307 465 B1**
(45) Veröffentlichungstag und Bekanntmachung des Hinweises auf die Patenterteilung: **03.04.2024**
(21) Anmeldenummer: 16729843.9
(22) Anmeldetag: 08.06.2016
(51) Int. Cl.: B23D 25/12, B23D 35/00, B26D 7/26

(54) **SCHERE MIT ZUMINDEST EINEM AUSWECHSELBAREN MESSER**
SHEARS WITH AT LEAST ONE REPLACEABLE BLADE
CISAILLE MUNIE D'AU MOINS UNE LAME INTERCHANGEABLE

(30) Priorität: 10.06.2015 DE 102015210640; 11.11.2015 DE 102015222181
(43) Veröffentlichungstag der Anmeldung: 18.04.2018
(73) Patentinhaber: SMS group GmbH, 40237 Düsseldorf (DE)
(72) Erfinder: RUNKEL, Thomas, 57074 Siegen (DE)
(74) Vertreter: Kross, Ulrich
(86) Internationale Anmeldenummer: PCT/EP2016/063032
(87) Internationale Veröffentlichungsnummer: WO 2016/198451

(56) Entgegenhaltungen:
- EP-A1- 1 603 716
- DE-A1- 3 030 744
- DE-A1- 19 542 173
- DE-B1- 1 502 685
- DE-U1- 9 204 618
- GB-A- 2 332 165
- US-A- 2 180 204
- US-A- 2 660 242
- US-A- 4 920 843

## Beschreibung

Die Erfindung betrifft eine Schere insbesondere für Walzband mit zumindest einem auswechselbaren Messer und einer Vorrichtung zum Wechseln eines Messers nach dem Oberbegriff von Anspruch 1.

Bei Scheren zum Schneiden bzw. Querteilen von Walzband ist es in der Regel erforderlich, die an der Schere angebrachten Messer zu wechseln, weil die Messer im Betrieb der Schere einer starken Abnutzung unterliegen. Entsprechend können die Befestigungen, mit denen die Messer an der Schere angebracht sind, gelöst werden, um die Messer geeignet auszutauschen.

Im Stand der Technik sind für solche Scheren Messerbefestigungen in Form von Schrauben oder Schraubenbolzen bekannt, die zum Auswechseln der Messer einfach gelöst werden können. Solche Befestigungsmittel unterliegen jedoch folgenden Nachteilen: Aufgrund der Hitze- und Medieneinwirkung im Betrieb der Schere können die Schrauben oder Schraubenbolzen nach einiger Betriebszeit zum Festsitzen neigen, so dass der Messerwechsel zeitaufwändig ist. Nach Anziehen der Befestigungsschrauben setzt sich ein Messer nach einigen Schnitten der Schere, so dass die Schrauben die notwendige Spannung zum Klemmen des Messers verlieren. Schließlich besteht ein weiterer Nachteil von solchen Messerbefestigungen darin, dass ein Handling der Schrauben oder Schraubenbolzen in der Regel manuell erfolgt, was zu langen Umrüstzeiten mit entsprechend hohen Kosten führt.

Zur Vermeidung der obigen Nachteile sind herkömmlich Lösungen bekannt, bei denen die Messer an einem Messerträger der Schere mit Federelementen, vorzugsweise in Form von Tellerfedern, befestigt werden, wobei eine Vorspannung der Federelemente eine selbsttätige Klemmung der Messer an dem Messerträger bewirkt. Hierbei bleibt die Spannung zur Messerklemmung stets gleichbleibend erhalten, wobei gleichzeitig ein Festsitzen von Schraubenelementen oder dergleichen vermieden werden kann. Ein Lösen der Messer von dem Messerträger der Schere kann hydraulisch unter Verwendung von Hydraulikzylindern erfolgen, wodurch ein Wechsel der Messer vorteilhaft in kurzer Zeit möglich ist.

DE 30 30 744 A1 zeigt eine gattungsgemäße Schere nach dem Oberbegriff von Anspruch 1.

Nach dem Stand der Technik, z.B. aus DE 34 23 275 A1, CN 202 57 14 56 U oder auch der vorstehend bereits genannten DE 30 30 744 A1, ist der Einsatz von Hydraulikzylindern bei Trommelscheren bekannt, wobei die Hydraulikzylinder innerhalb einer Messertrommel der Trommelschere angeordnet sind. Nachteilig hierbei ist, dass die Lösekraft der in der Messertrommel eingebauten Hydraulikzylinder wegen der kleinen baulichen Abmessungen, und aus dem gleichen Grund auch die Klemmkräfte der Federelemente, begrenzt sind. Weiters sind die Dichtungen der Hydraulikzylinder wärmempfindlich, so dass die Messer und die Messertrommel zur Begrenzung von Bauteiletemperaturen aufwändig gekühlt werden müssen. Weitere Nachteile bestehen darin, dass die notwendigen Bohrungen zur Zuführung des Hydrauliköls zu den Hydraulikzylindern innerhalb der Messertrommel aufwändig herzustellen sind, und dass die Anschlüsse für das Hydrauliköl zu den Hydraulikzylindern aufwändig an die Außenseite der Schere zu verlegen sind.

Entsprechend liegt der Erfindung die Aufgabe zugrunde, das Wechseln eines Messers an einer Schere insbesondere für Walzband konstruktiv zu vereinfachen und zeitsparend auszugestalten.

Die obige Aufgabe wird durch eine Schere mit den Merkmalen von Anspruch 1 gelöst. Vorteilhafte Weiterbildungen der Erfindung sind in den abhängigen Ansprüchen definiert.

Eine Schere gemäß der vorliegenden Erfindung eignet sich insbesondere für Walzband, und umfasst zumindest ein auswechselbares Messer und zumindest einen Messerträger, an dem ein Messer durch eine mittels eines Kraftspeichers vorgespannte Zugstange, die in einer in dem Messerträger ausgebildeten Bohrung beweglich aufgenommen ist, selbsttätig festlegbar ist. Weiterhin umfasst die erfindungsgemäße Schere eine Vorrichtung, die zum Wechseln eines Messers der Schere dient. Diese Vorrichtung umfasst zumindest ein Stellorgan, das zum Lösen des Messers von dem Messerträger derart betätigbar ist, dass dadurch die Zugstange in axialer Richtung entgegengesetzt zu ihrer Vorspannung bewegt wird. Hierbei ist das Stellorgan in Form eines Hydraulikzylinders ausgebildet und weist einen Betätigungsstift auf, der mit einem Kolben des Hydraulikzylinders verbunden ist und in Richtung einer Längsachse der Zugstange beweglich und mit einer Stirnseite der Zugstange entweder unmittelbar oder mittelbar, vorzugsweise durch eine Verbindungsstange, in Kontaktanlage gebracht werden kann. Das Stellorgan in Form des Hydraulikzylinders ist an einer Außenseite des Messerträgers oder außerhalb des Messerträgers angeordnet.

Der Erfindung liegt die wesentliche Erkenntnis zugrunde, dass durch die Positionierung des Stellorgans in Form des Hydraulikzylinders entweder an der Außenseite des Messerträgers oder gänzlich außerhalb des Messerträgers die im Betrieb der Schere entstehenden Temperaturen sich weniger oder gar nicht auf das Stellorgan auswirken, so dass Beschädigungen des Stellorgans infolge von zu hohen Temperaturen ausgeschlossen sind. Gleichzeitig gewährleistet die Erfindung eine einfache und sichere Befestigung eines Messers an einem Messerträger, bei gleichzeitiger Möglichkeit eines schnellen Messerwechsels. Ein weiterer Vorteil besteht darin, dass durch ein Stellorgan, welches außerhalb des Messerträgers angeordnet ist, höhere Lösekräfte auf die Zugstange der Schere übertragen werden können, weil hierbei keine bauliche Begrenzungen in Bezug auf das Stellorgan bestehen. In gleicher Weise erhöht sich durch den Wegfall von Hydraulikzylindern innerhalb des Messerträgers der Einbauraum für einen auf die Zugstange wirkenden Kraftspeicher, z.B. in Form von Tellerfedern oder dergleichen, so dass die Klemmkraft zum Festlegen der Messer an dem Messerträger erhöht werden kann, z.B. durch Einbau von größeren und somit stärkeren Tellerfedern - als Kraftspeicher zum Erzeugen der auf die Zugstange wirkenden Vorspannung - in dem Messerträger.

Das Lösen des Messers erfolgt derart, dass durch das Stellorgan eine Druckkraft oder eine Zugkraft auf die Zugstange ausgeübt wird, um deren Vorspannung aufzuheben und dann das Messer von dem Messerträger lösen zu können.

In vorteilhafter Weiterbildung der Erfindung kann das Stellorgan, als Vorbereitung zur Durchführung eines Messerwechsels bei einer Schere, temporär an dem Messerträger der Schere angebracht sein. Dies hat den Vorteil, dass das Stellorgan nach Beendigung des Messerwechsels wieder von dem Messerträger gelöst wird, und bei einem normalen Betrieb der Schere nicht mit dem Messerträger in Verbindung steht. In gleicher Weise ist es möglich, auch eine mit dem Stellorgan in Wirkverbindung stehende Verbindungsstange temporär mit dem Messerträger zu verbinden, wenn ein Messerwechsel durchgeführt werden soll.

In vorteilhafter Weiterbildung der Erfindung kann das Stellorgan mit einem an der Außenseite des Messerträgers befindlichen Kontaktblock befestigt werden, vorzugsweise formschlüssig. Hierdurch ist eine betriebssichere und schnelle Befestigung des Stellorgans an der Außenseite des Messerträgers gewährleistet, insbesondere für den Fall, wenn, wie vorstehend erläutert, das Stellorgan zur Durchführung eines Messerwechsels lediglich temporär an dem Messerträger angebracht ist.

Dadurch, dass das Stellorgan als Hydraulikzylinder ausgebildet ist, sind eine hohe Kraftdichte auf kleinem Raum gewährleistet ist und somit eine hohe Lösekraft möglich, um die Zugstange der Schere in ihrer axialen Richtung gegen die Vorspannung des Kraftspeichers zu bewegen. Falls ein Stellorgan in Form eines Hydraulikzylinders lediglich temporär an dem Messerträger angebracht ist, ergibt sich auch der Vorteil, dass der Hydraulikzylinder, wenn er von dem Messerträger demontiert ist, in einfacher Weise außerhalb der Produktionsstraße im Workshop gewartet werden kann.

Nach einer alternativen Ausführungsform der Erfindung kann das Stellorgan auch rein mechanisch funktionieren, und hierbei in Form einer Schraube ausgebildet sein. Falls an einer Außenseite des Messerträgers ein Kontaktblock vorgesehen ist, kann eine solche Schraube mit einem Innengewinde des Kontaktblocks in Eingriff gebracht werden, um dann mit ihrer Stirnseite auf die Zugstange innerhalb des Messerträgers einzuwirken, nämlich zum Lösen des Messers von dem Messerträger. Durch den Einsatz von rein mechanischen Stellorganen anstelle von Hydraulikzylindern reduzieren sich die Investitions- und Wartungskosten für die Erfindung erheblich.

Die vorliegende Erfindung betrifft auch eine Schere mit zumindest einem auswechselbaren Messer, wobei die Schere in Verbindung mit der vorstehend erläuterten Vorrichtung zum Wechseln eines Messers verwendet werden kann. Eine solche Schere umfasst einen Messerträger, an dem das Messer durch eine mittels eines Kraftspeichers vorgespannte Zugstange selbsttätig festgelegt werden kann. Ein Lösen des Messers erfolgt dann durch eine Betätigung des Stellorgans der erfindungsgemäßen Vorrichtung, wobei durch die Betätigung des Stellorgans die Zugstange in axialer Richtung entgegengesetzt zu ihrer Vorspannung bewegt wird und dadurch ein Verklemmen des Messers an dem Messerträger aufgehoben wird.

In vorteilhafter Weiterbildung der Erfindung kann der Messerträger der Schere an seiner Außenseite und in Verlängerung der Längsachse der Zugstange zumindest einen Kontaktblock aufweisen, an dem das Stellorgan der Vorrichtung, oder alternativ eine mit dem Stellorgan koppelbare Verbindungsstange, vorzugsweise formschlüssig befestigt werden kann. Hierdurch ist es möglich, das Stellorgan oder eine mit dem Stellorgan koppelbare Verbindungsstange an der Außenseite des Messerträgers in kurzer Zeit zu befestigen und anschließend wieder davon zu lösen. Der Kontaktblock übernimmt bei daran befestigtem Stellorgan die Funktion, dass bei einer Betätigung des Stellorgans und der hierdurch erzeugten Druckkraft, die auf die Zugstange in Richtung von deren Längsachse wirkt, die erforderliche Gegenkraft in den Messerträger abgestützt bzw. eingeleitet wird. Gleiches gilt für den Fall, dass nicht das Stellorgan selbst, sondern stattdessen eine mit dem Stellorgan koppelbare Verbindungsstange an dem Kontaktblock befestigt ist.

In vorteilhafter Weiterbildung der Erfindung kann es sich bei der erfindungsgemäßen Schere um eine rotierende Schere handeln, wobei der Messerträger als Messertrommel ausgebildet ist. Im Hinblick auf eine Rotation der Messertrommel ist es von großem Vorteil, wenn, wie vorstehend erläutert, das Stellorgan zum Wechseln eines Messers nur temporär an der Außenseite des Messerträgers angebracht wird, jedoch im normalen Betrieb der Schere von dem Messerträger bzw. von der Messertrommel demontiert ist. Entsprechend entstehen dann bei einer Rotation der Messertrommel weniger Unwuchten, wobei Steuerleitungen oder dergleichen, die zur Messertrommel führen, nicht erforderlich sind.

Zweckmäßigerweise kann die Erfindung bei Trommelscheren in einer Warmbandstraße zur Erzeugung von flachgewalztem Stahl eingesetzt werden, wobei mit einer solchen Trommelschere Walzband geschnitten wird. Insbesondere für Endloswalzanlagen kann die Erfindung eingesetzt werden, da hier durch den kontinuierlichen Betrieb eine hohe Wärmeinwirkung auf Messer und Messerträger vorliegt, die den Einsatz hydraulischer Messerklemmungen nach dem Stand der Technik wegen der Beschädigung der Dichtungen infolge hohe Temperatur verbietet. Gleichwohl eignet sich die Erfindung auch für den Einbau in andere Scherentypen, wie Kurbelschere, Pendelschere oder Kreismesserschere.

Es darf darauf hingewiesen werden, dass sich die Erfindung für jede Art einer Schere eignet, bei der zumindest ein Messer an einem Messerträger durch Klemmen befestigt wird, wobei die Befestigungsmittel zum Austauschen des Messers lösbar ausgestaltet sind, nämlich durch eine Betätigung eines hierzu geeigneten Stellorgans. Jedenfalls ist durch die Erfindung eine betriebssichere und wartungsarme Ausführung einer Messerbefestigung sichergestellt.

In vorteilhafter Weiterbildung der Erfindung können alle Dichtungen im Spannsystem als metallische Dichtung ausgeführt sein. Dies führt zu dem Vorteil, dass eine Beschädigung oder gar Zerstörung der Dichtungen in Folge von Wärmeeinwirkung vermieden wird.

Nachstehend sind Ausführungsbeispiele der Erfindung anhand einer schematisch vereinfachten Zeichnung im Detail beschrieben.

Es zeigen:
- Fig. 1: Eine vereinfachte seitliche Querschnittsansicht einer Schere nach der vorliegenden Erfindung,
- Fig. 2: eine vereinfachte seitliche Querschnittsansicht der Schere von Fig. 1, in Verbindung mit einer Vorrichtung nach der vorliegenden Erfindung zum Wechseln eines Messers an einer Schere,
- Fig. 3: eine vereinfachte seitliche Querschnittsansicht einer erfindungsgemäßen Vorrichtung zum Wechseln eines Messers einer Schere nach einer weiteren Ausführungsform,
- Fig. 4: eine vereinfachte seitliche Querschnittsansicht einer Schere und einer Vorrichtung zum Wechseln eines Messers an einer Schere nach der vorliegenden Erfindung gemäß einer weiteren Ausführungsform,
- Fig. 5: eine vereinfachte seitliche Querschnittsansicht einer Schere und einer Vorrichtung zum Wechseln eines Messers an einer Schere nach der vorliegenden Erfindung gemäß einer weiteren Ausführungsform,
- Fig. 6a, Fig. 6b: Querschnittsansichten einer Befestigungseinrichtung der Vorrichtung zum Wechseln eines Messers von Fig. 5,
- Fig. 7: eine vereinfachte seitliche Querschnittsansicht einer erfindungsgemäßen Schere nach einer weiteren Ausführungsform,
- Fig. 8: eine vereinfachte seitliche Querschnittsansicht einer erfindungsgemäßen Schere nach einer weiteren Ausführungsform,
- Fig. 9: eine vereinfachte seitliche Stirnseitenansicht, teilweise freigeschnitten, einer Schere und einer Vorrichtung zum Wechseln eines Messers an einer Schere nach der vorliegenden Erfindung gemäß einer weiteren Ausführungsform,
- Fig. 10: die Schere und die Vorrichtung von Fig. 10 in einem Betriebszustand zum Wechseln eines an der Schere angebrachten Messers,
- Fig. 11: eine vereinfachte seitliche Stirnseitenansicht, teilweise freigeschnitten, einer Schere und einer Vorrichtung zum Wechseln eines Messers an einer Schere nach der vorliegenden Erfindung gemäß einer weiteren Ausführungsform, in einem Betriebszustand zum Wechseln von an der Schere angebrachten Messern,
- Fig. 12: eine vereinfachte seitliche Querschnittsansicht eines weiteren Scherentyps, bei dem die erfindungsgemäße Vorrichtung zum Wechseln eines Messers eingesetzt werden kann, und
- Fig. 13: zeigt eine Variante zur Ausführungsform der erfindungsgemäßen Vorrichtung von Fig. 2.

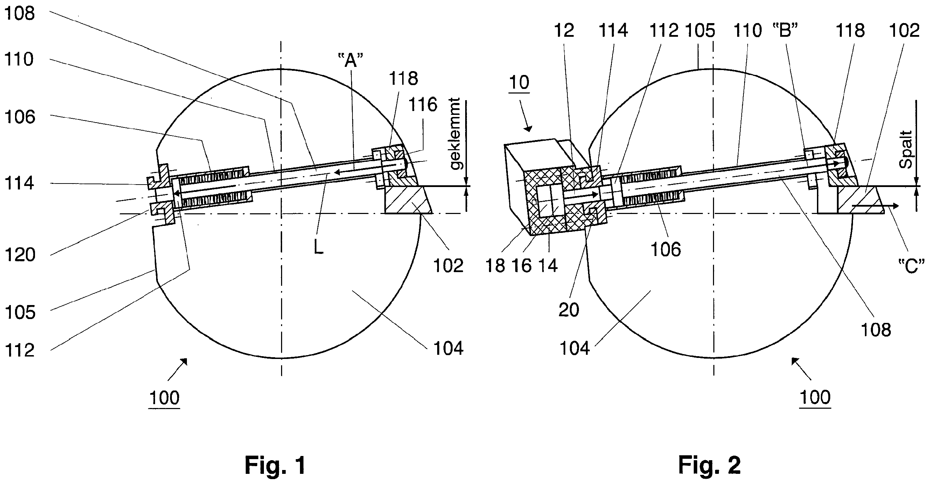

Fig. 1 zeigt eine vereinfachte seitliche Querschnittsansicht einer Schere 100 nach der vorliegenden Erfindung, bei der zumindest ein Messer 102 an einem Messerträger 104 durch Klemmung befestigt werden kann. Die Schere 100 kann als rotierende Schere ausgebildet sein, wobei es sich dann bei dem Messerträger 104 um eine rotierende Messertrommel handelt. Die Klemmung des Messers 102 an der Messertrommel 104 erfolgt mittels eines Kraftspeichers 106, durch den eine auf das Messer 102 wirkende Zugstange 108 vorgespannt wird. Der Kraftspeicher 106 ist vorzugsweise in Form von Tellerfedern ausgebildet, und wird nachfolgend stets nur als Tellerfeder bezeichnet, ohne darin eine Einschränkung auf diesen Typ von Kraftspeicher zu verstehen.

In der Messertrommel 104 ist eine Bohrung 110 ausgebildet, um darin die Tellerfeder 106 und die Zugstange 108 aufzunehmen. Die Tellerfeder 106 ist an einem Ende der Zugstange 108 angebracht, wobei angrenzend an die Tellerfeder 106 an einer Stirnseite der Zugstange 108 ein Basiselement 112 befestigt ist, das an einem an einer Außenseite 105 der Messertrommel 104 vorgesehenen Kontaktblock 114 anliegt. An der entgegengesetzten Stirnseite der Zugstange 108 ist mittels einer Schraube 116 ein Klemmstück 118 angebracht, das in Wechselwirkung mit dem Messer 102 gebracht werden kann.

Durch die Tellerfeder 106 wird auf die Zugstange 108 eine Vorspannung ausgeübt, die in der Fig. 1 mit dem Pfeil "A" symbolisiert ist. Durch diese Vorspannung gelangt das Klemmstück 118 in Kontakt mit dem Messer 102, wodurch das Messer 102 an der Messertrommel 104 festgelegt bzw. verklemmt wird.

Bei der Schere 100 gemäß Fig. 1 wird das Messer 102 durch die mittels der Tellerfeder 106 vorgespannte Zugstange 108 selbsttätig an der Messertrommel 104 festgelegt. Eine Rotation der Messertrommel 104 wird erfindungsgemäß dadurch erleichtert, indem Mittel zum Lösen bzw. Wechseln des Messers 102 nicht permanent an der Messertrommel 104 angebracht sind. Entsprechend ist es auch nicht erforderlich, Steuerleitungen oder dergleichen für die rotierende Messertrommel 104 vorzusehen.

Fig. 2 zeigt die Schere 100 von Fig. 1, in Verbindung mit einer erfindungsgemäßen Vorrichtung 1 zum Wechseln des Messers 102. Hierbei umfasst die Vorrichtung 1 ein Stellorgan 10, das an der Außenseite 105 der Messertrommel 104, nämlich an dem Kontaktblock 114 formschlüssig befestigt ist. Das Stellorgan 10 weist einen Betätigungsstift 12 auf, der in Richtung der Längsachse L der Zugstange 108 beweglich ist. Im Einzelnen kann der Betätigungsstift 12 in Richtung des Pfeils "B" bewegt werden, nämlich entgegengesetzt zur Vorspannungsrichtung der Zugstange 108, um dadurch die Klemmung zwischen dem Klemmstück 118 und dem Messer 102 aufzuheben und anschließend das Messer 102 von der Messertrommel 104 abnehmen zu können. Die Ausbaurichtung des Messers 102, für ein Demontieren von der Messertrommel 104, ist in Fig. 2 durch den Pfeil "C" symbolisiert.

Bei der in Fig. 2 gezeigten Ausführungsform ist das Stellorgan 10 als Hydraulikzylinder 14 ausgebildet, wobei der Betätigungsstift 12 der Vorrichtung 1 mit einem Kolben 16 des Hydraulikzylinders 14 verbunden ist. Falls ein Ölraum 18 des Hydraulikzylinders 14 mit Druck bzw. Öl beaufschlagt ist, wird der Kolben 16 in Verbindung mit dem Betätigungsstift 12 in Richtung der Zugstange 108 - in der Darstellung von Fig. 2 nach rechts - bewegt. In Folge dessen gelangt eine Stirnseite des Betätigungsstifts 12 in Kontakt mit einer daran angrenzenden Stirnseite des Basiselements 112, wodurch die Zugstange 108 entgegen der von der Tellerfeder 106 ausgeübten Vorspannung in der Bohrung 110 derart verschoben wird, dass die Klemmung zwischen dem Klemmstück 118 und dem Messer 102 aufgehoben wird. Anschließend kann dann das Messer 102 in der Richtung "C" von der Messertrommel 104 abgenommen und somit ausgebaut bzw. gewechselt werden.

Beim Einbau eines neuen Messers 102 wird, nachdem das Messer 102 in Position an der Messertrommel 104 und in Kontakt mit dem Klemmstück 118 gebracht ist, der Ölraum 18 des Hydraulikzylinders 14 drucklos gestellt, so dass dann die Vorspannung der Tellerfeder 106 eine Bewegung der Zugstange 108 in der Richtung "A" (vgl. Fig. 1) bewirkt und dadurch zu einem selbsttätigen Festklemmen des Messers 102 an der Messertrommel 104 führt.

An dem Hydraulikzylinder 14 sind an einer Außenseite nach innen kragende Stege 20 ausgebildet, die in Eingriff mit einem an dem Kontaktblock 114 ausgebildeten Schulterabschnitt 120 gebracht werden können. Hierdurch ist eine formschlüssige Befestigung des Hydraulikzylinders 14 mit dem Kontaktlock 114 möglich, wodurch sich die Vorrichtung 1 an der Außenseite 105 in kurzer Zeit anbringen lässt. Diesbezüglich darf darauf hingewiesen werden, dass eine solche Befestigung der Vorrichtung 1 an der Außenseite 105 der Messertrommel 104 nur vorübergehend bzw. temporär erfolgt, nämlich zwecks eines Auswechseln des Messers 102. Dies bedeutet, dass nach einem erfolgten Wechseln des Messers 102 die Vorrichtung 1 wieder von dem Kontaktblock 114 demontiert und von der Schere 100 entfernt wird, so dass ein normaler Betrieb der Schere 100 mit rotierender Messertrommel 104 ohne Einbeziehung der Vorrichtung 1 erfolgt.

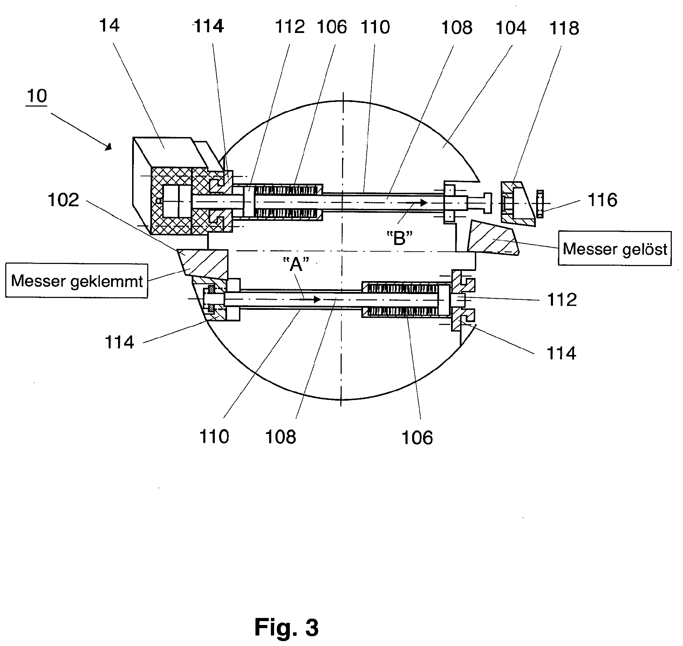

Fig. 3 zeigt eine vereinfachte seitliche Querschnittsansicht der Erfindung nach einer weiteren Ausführungsform. Hierbei sind in der Messertrommel 104 zwei Bohrungen 110 ausgebildet, die zueinander parallel verlaufen und jeweils zur Aufnahme einer Zugstange 108 und einer daran angebrachten Tellerfeder 106 dienen. Durch die Zugstangen 108 werden jeweils Messer 102 an der Messertrommel 104 festgeklemmt. Der Klemmmechanismus entspricht in gleicher Weise der Ausführungsform von Fig. 1 bzw. Fig. 2, so dass zur Vermeidung von Wiederholungen darauf verwiesen werden darf.

Bei der Ausführungsform von Fig. 3 sind die Kontaktblöcke 114 jeweils um 180° zueinander versetzt an der Außenseite 105 der Messertrommel 104 angebracht. Hierdurch ist es möglich, die Messer 102 ebenfalls um 180° versetzt zueinander an der Messertrommel 104 festzuklemmen.

In der Darstellung von Fig. 3 ist die obere Zugstange 108 durch den Hydraulikzylinder 14, der an dem Kontaktblock 114 befestigt ist, derart beaufschlagt, dass - in gleicher Weise wie bei der Darstellung von Fig. 2 - die Zugstange 108 in Richtung des Pfeils "B" innerhalb der Bohrung 110 bewegt wird, um die Klemmung zwischen dem Messer 102 und der Messertrommel 104 aufzuheben. Zum vollständigen Demontieren des Messers 102 kann das Klemmstück 118 z.B. mittels einer Bajonettbefestigung von der Zugstange 108 entfernt werden, wonach dann das Messer 102 komplett freiliegt für einen gewünschten Ausbau. Die untere Zugstange 108 wird durch die Vorspannung der Tellerfeder 106 in Richtung des Pfeils "A" vorgespannt, wodurch das Messer 102 an der Messertrommel 104 geklemmt wird. In Bezug auf die untere Zugstange 108 von Fig. 3 darf darauf hingewiesen werden, dass an dem zugeordneten Kontaktblock 114 ebenfalls ein Hydraulikzylinder 14 befestigt werden kann, um in gleicher Weise wie bei der oberen Zugstange 108 von Fig. 3 ein Lösen des Messers 102 zu bewirken.

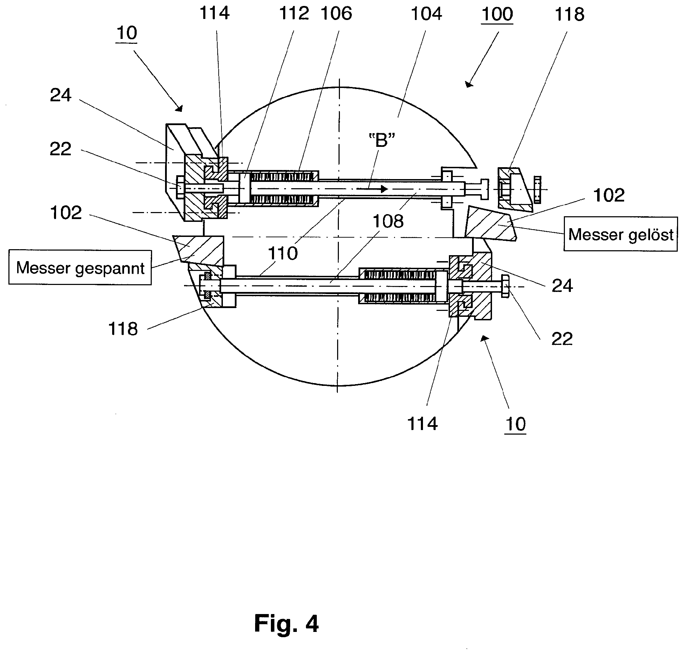

Fig. 4 zeigt eine weitere Ausführungsform der Erfindung, bei der der Betätigungsstift 12 des Stellorgans 10 eine Schraube 22 umfasst, die in ein Innengewinde einer Stützplatte 24 eingreift. Die Stützplatte 24 weist an ihrer Außenseite Stege 20 auf, mit denen die Stützplatte 24 - in gleicher Weise wie der Hydraulikzylinder 14 - formschlüssig an einem Kontaktblock 114 an der Außenseite 105 der Messertrommel 104 befestigt werden kann.

Bei der Ausführungsform von Fig. 4 sind in der Messertrommel 104 - in gleicher Weise wie bei der Ausführungsform von Fig. 3 - zwei parallel zueinander verlaufende Bohrungen 110 ausgebildet, so dass Messer 102 in einem Winkel von 180° zueinander versetzt an der Messertrommel 104 angebracht bzw. verklemmt werden können.

Zum Lösen eines Messers 102 wird bei der Ausführungsform von Fig. 4 die Stützplatte 24 an einem Kontaktblock 114 an der Außenseite 105 der Messertrommel 104 befestigt, und anschließend die Schraube 22 derart in das Innengewinde der Stützplatte 24 hineingedreht, dass eine freie Stirnseite der Schraube 22 in Kontakt mit dem Basiselement 112 gelangt und dadurch die Zugstange 108 in Richtung des Pfeils "B" innerhalb der Bohrung 110 bewegt. Dies ist für die obere Zugstange 108 in Fig. 4 veranschaulicht, wobei nach Aufhebung der Klemmung mit dem Klemmstück 118 das Messer 102 von der Messertrommel 104 abgenommen werden kann. Bei der unteren Zugstange 108 von Fig. 4 ist die Schraube 22 in dem Innengewinde der Stützplatte 24 soweit herausgedreht, dass das zugeordnete Messer 102 (im Bildbereich links gezeigt) an der Messertrommel festgeklemmt ist.

Bezüglich des Stellorgans 10 nach der Ausführungsform von Fig. 4 darf darauf hingewiesen werden, dass deren Stützplatte 24 vorzugsweise nur vorübergehend bzw. temporär an dem Kontaktblock 114 befestigt sein kann, nämlich zwecks Auswechselns der Messer 102. Entsprechend wird die Messertrommel 104 bei einem normalen Betrieb der Schere 100 in Rotation versetzt, ohne dass dabei an deren Außenseite 105 die Stützplatten 24 befestigt sind.

An dieser Stelle darf darauf hingewiesen werden, dass sich die Ausführungsform von Fig. 4 aufgrund ihrer Einfachheit und erkennbaren Robustheit auch dazu eignet, an der Messertrommel 104 permanent angebracht zu sein.

Weiters darf darauf hingewiesen werden, dass eine Vorrichtung 1 mit einem Stellorgan 10 gemäß der Ausführungsform von Fig. 4 auch in Verbindung mit einer Schere 100 verwendet werden kann, bei der - in Abweichung zur Darstellung von Fig. 4 - in der Messertrommel 104 lediglich eine Bohrung ausgebildet ist.

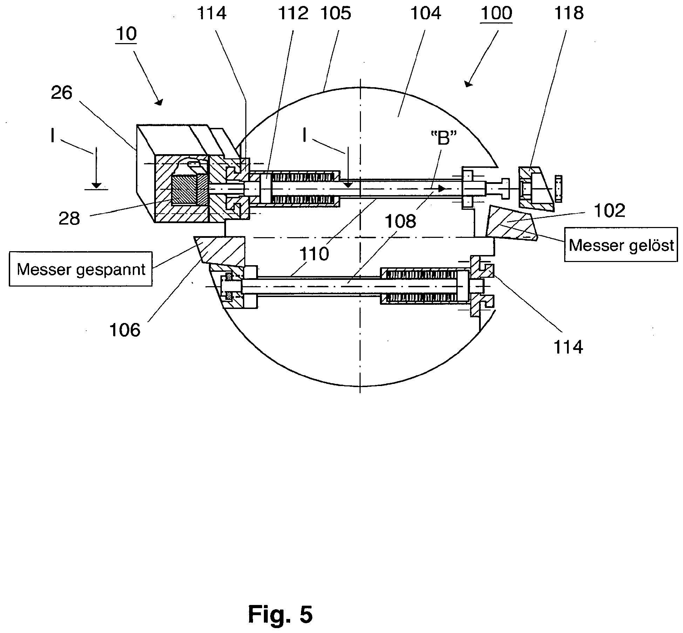

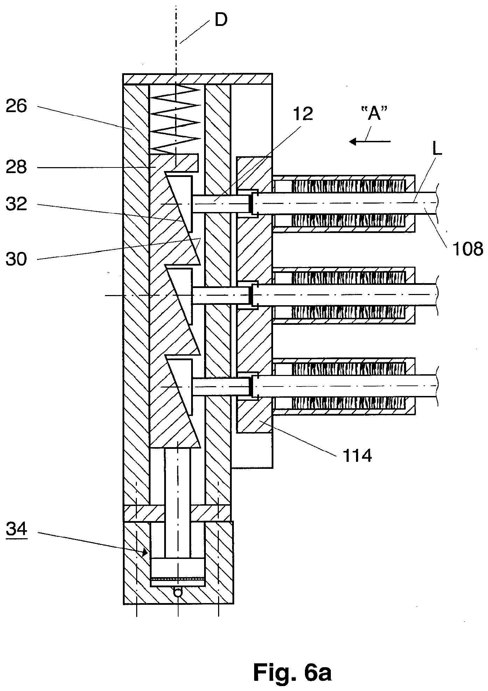

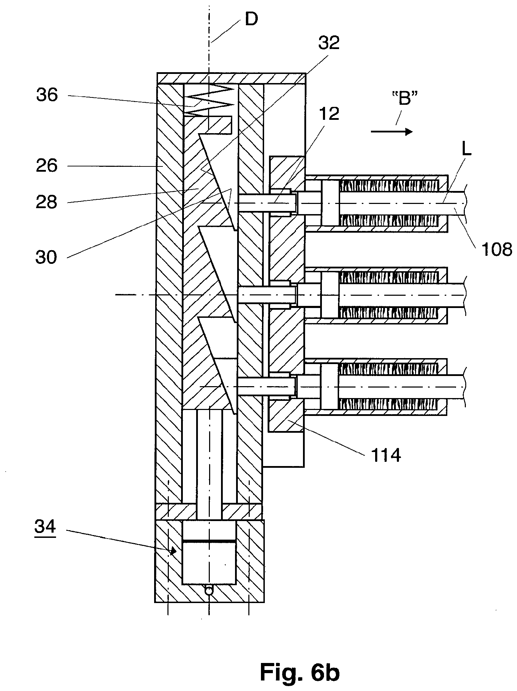

Fig. 5 verdeutlicht eine weitere Ausführungsform der Erfindung, bei der das Stellorgan 10 ein an einem Kontaktblock 114 befestigbares Gehäuse 26 aufweist, in dem ein bewegliches Stellelement 28 mit einer ersten Keilfläche 30 aufgenommen ist. In der Messertrommel 104 sind - in gleicher Weise wie bei der Ausführungsform von Fig. 4 - zwei zueinander parallele Bohrungen 110 ausgebildet, in denen wie erläutert die von Tellerfedern 106 unter Vorspannung gesetzten Zugstangen 108 aufgenommen sind. In der Darstellung von Fig. 5 ist beispielhaft das Stellorgan 10 mit seinem Gehäuse 26 an dem Kontaktblock 114 befestigt, der der oberen Zugstange 108 zugeordnet ist. Details zur Ausgestaltung des Gehäuses 26 und des darin aufgenommenen Stellelements 28 ergeben sich aus der Schnittansicht entlang der Linie "I -l", die Grundlage für die Fig. 6a, 6b ist.

Das Stellelement 28 ist innerhalb des Gehäuses 26 in Richtung der Achse "D" beweglich. Das Stellelement 28 weist eine erste Keilfläche 30 auf. An einer Stirnseite des Betätigungsstifts 12, die der Zugstange 108 entgegengesetzt ist, ist eine zweite Keilfläche 32 ausgebildet, die zur ersten Keilfläche 30 komplementär ist.

In der Fig. 6a ist das Stellorgan 10 in einer an dem Kontaktblock 114 befestigten Ausgangsstellung gezeigt, bei der die Zugstange 108 mittels der von den Tellerfedern 106 ausgeübten Vorspannung in der Wirkrichtung "A" gedrückt wird. Das Stellorgan 10 umfasst einen Aktuator 34, durch den - wie in der Fig. 6b veranschaulicht - das Stellelement 28 entlang der Achse D bewegt wird, derart, dass dabei der Betätigungsstift 12 in die Wirkrichtung "B" verschoben wird. Die Verschiebung des Stellelements 28 erfolgt hierbei gegen die Vorspannung einer Feder 36. In Folge dessen wird die Zugstange 108 entgegen der Richtung ihrer Vorspannung innerhalb der Bohrung 110 bewegt, um die Klemmung des Messers 102 mit der Messertrommel 104 aufzuheben. Bei dem Aktuator 34 kann es sich um einen Hydraulikzylinder oder eine gleichwirkende Schraube handeln. In Bezug auf die Relativverschiebung der beiden Keilflächen 30, 32 ist von Bedeutung, dass die Achse D, entlang der das Stellelement 28 durch den Aktuator 34 verschoben wird, rechtwinklig verläuft zur Längsachse L der Zugstange 108.

Bei der Ausführungsform gemäß Fig. 5 ist das Stellorgan 10 zur Vereinfachung beispielhaft nur an dem Kontaktblock, 114 welcher der oberen Zugstange 108 zugeordnet ist, befestigt. Es versteht sich, dass das Stellorgan 10 nach dieser Ausführungsform auch an dem Kontaktblock 114, welcher der unteren Zugstange 108 zugeordnet ist, zum Lösen des Messers 102 befestigt werden kann.

In Bezug auf die in der Messertrommel 104 ausgebildeten Bohrungen 110 darf darauf hingewiesen werden, dass diese Bohrungen nicht nur zueinander parallel, sondern auch in einem Winkel von 90° versetzt zueinander ausgebildet sein können.

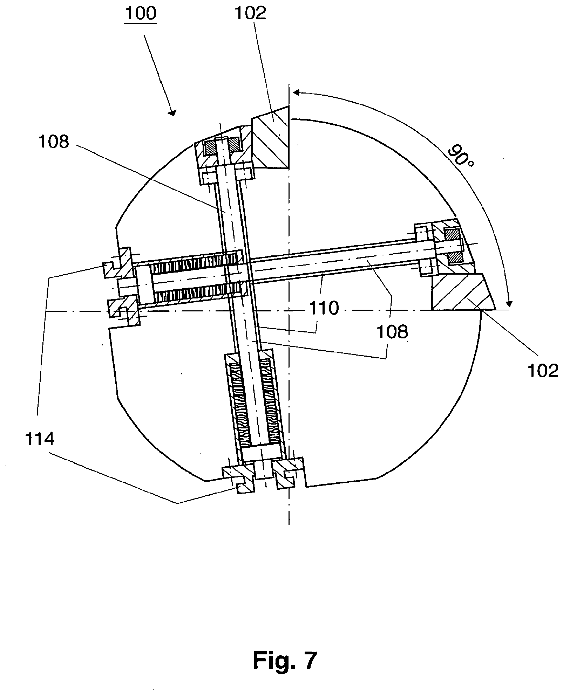

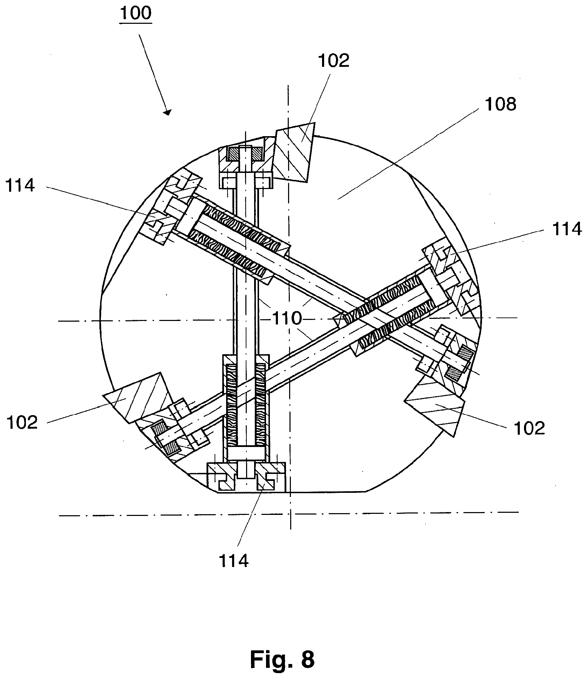

Dies ist in der vereinfachten seitlichen Querschnittsansicht von Fig. 7 veranschaulicht. Nach einer weiteren alternativen Ausführungsform der Erfindung kann vorgesehen sein, dass in der Messertrommel 104 auch mehr als zwei Bohrungen 110 ausgebildet sind, z.B. ausweislich der Darstellung von Fig. 8 insgesamt drei Bohrungen 110. Bezüglich der Bohrungen 110 gemäß Fig. 7 und Fig. 8 versteht sich, dass diese in der Messertrommel 104 zueinander versetzt eingebracht sind, nämlich entlang einer Längsachse der Messertrommel 104 (senkrecht zur Darstellungsebene gemäß Fig. 7, Fig. 8). Durch die Mehrzahl an Bohrungen 110 ist es möglich, mehrere Messer 102 in verschiedenen Winkeln zueinander an der Messertrommel 104 zu verklemmen. Dies erfolgt nach dem gleichen Klemm- und Lösemechanismus wie oben erläutert, nämlich unter Verwendung eines Klemmstücks 118 an einem Ende der Zugstange 108 und einem an der Außenseite 105 der Messertrommel 104 angeordneten Kontaktblock 114, an dem die Vorrichtung 1 mit ihrem Stellorgan 10 vorzugsweise temporär befestigt werden kann.

Bei den obigen Ausführungsformen wird zum Lösen des Messers 102 von dem Stellorgan eine Druckkraft auf die Zugstange 108 ausgeübt, um deren Vorspannung aufzuheben und anschließend das Messer 102 von der Messertrommel 104 demontieren zu können.

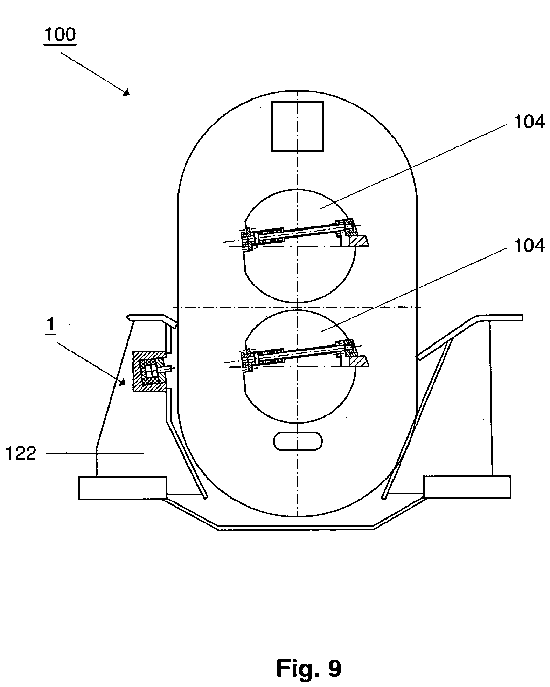

Fig. 9 zeigt vereinfacht eine Stirnseitenansicht der erfindungsgemäßen Schere 100, teilweise freigeschnitten, wobei die Vorrichtung 1 zum Wechseln zumindest eines Messers 102 der Schere 100 an einer außenliegenden Abstützung 122 angebracht ist. Eine solche außenliegende Abstützung kann beispielsweise in Form eines Ständerrahmens 122 ausgebildet sein, und wird nachfolgend - ohne darin eine Einschränkung zu sehen - stets nur als solcher bezeichnet. Hierbei kann die Vorrichtung 1 an dem Ständerrahmen 122 entweder temporär oder dauerhaft befestigt sein. Gemäß Fig. 9 befindet sich die Schere 100 in einer Betriebsposition, wenn zwischen dem Stellorgan 10 der Vorrichtung 1 und einer in der Messertrommel 104 aufgenommenen Zugstange 108 keine Verbindung besteht.

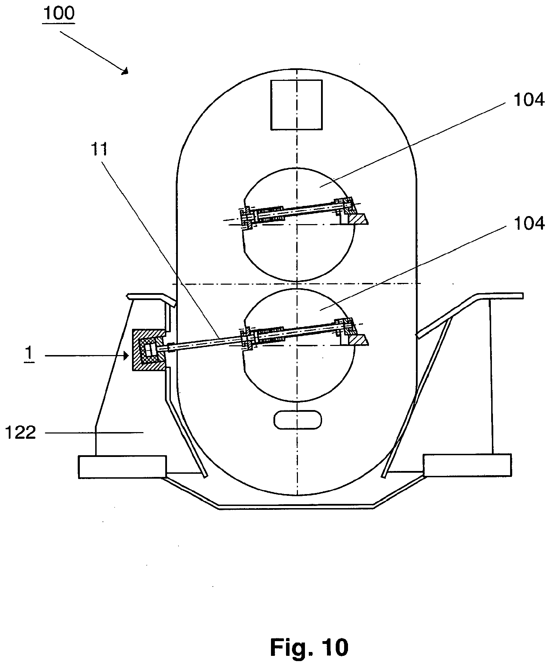

Ungeachtet der Art einer Befestigung der Vorrichtung 1 an dem Ständerrahmen 122 gemäß Fig. 9 ist es mit einer solchen Anordnung der Vorrichtung 1 möglich, das Stellorgan 10 mittels einer Verbindungsstange 11 mit einer innerhalb der Messertrommel 104 aufgenommenen Zugstange 108 zu koppeln, indem die Verbindungsstange 11 sowohl an einem der Zugstange 108 zugeordneten Kontaktblock 114 befestigt und mit dem Betätigungsstift 12 verbunden wird. Dies ist in der Darstellung von Fig. 10 in Bezug auf die untere Messertrommel 104 gezeigt, die um ihre Rotationsachse derart positioniert ist, dass eine Längsachse der Zugstange 108 mit einer Verbindungsstrecke in Richtung des Stellorgans 10 fluchtet. Nachdem die Verbindungsstange 11 wie gezeigt zwischen dem Stellorgan 10 und dem Kontaktblock 114 an der Außenseite 105 der Messertrommel 104 angebracht ist, kann die Betätigung des Stellorgans 10, in gleicher Weise wie vorstehend erläutert, durch die Verbindungsstange 11 auf die Zugstange 108 übertragen werden, um die Zugstange 108 in der Wirkrichtung "B" zum Lösen der Messer zu bewegen.

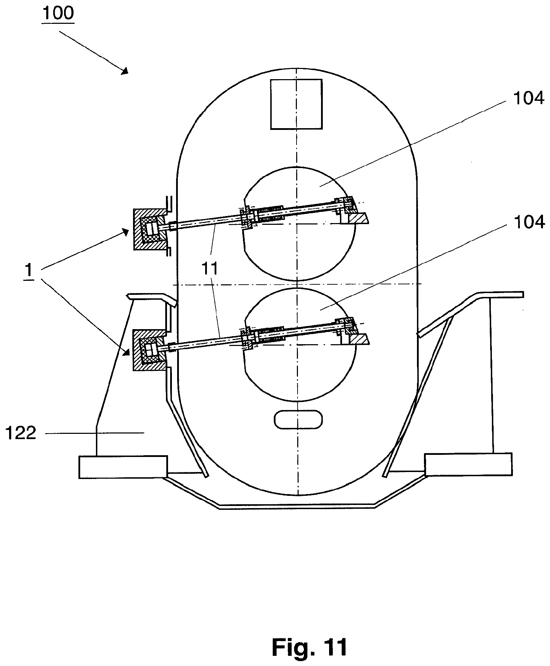

Fig. 11 zeigt eine Variante der Ausführungsform von Fig. 10, bei der angrenzend an der oberen Messertrommel 104 eine separate Vorrichtung 1 vorgesehen ist. Dies hat den Vorteil, dass ein Wechseln der Messer gleichzeitig für die obere und untere Messertrommel 104 der Schere 100 möglich ist.

In Bezug auf die Messer 102 darf darauf hingewiesen werden, dass diese eine längliche Erstreckung aufweisen können, z.B. in Form eines Messerbalkens. Entsprechend sind für diesen Fall in einer Messertrommel 104 eine Mehrzahl von Bohrungen 110 ausgebildet, die entlang der Mittenachse der Messertrommel 104 in Reihe und parallel zueinander ausgebildet sind. In jeder dieser Bohrungen 110 ist dann wie erläutert eine Zugstange 108 zum Klemmen des Messers 102 aufgenommen. In Entsprechung der Längserstreckung des Messers 102 weist die Vorrichtung 1 ebenfalls eine Längserstreckung auf, mit einer Mehrzahl an Stellorganen 10, die jeweils an den Kontaktblöcken 114, die den einzelnen Bohrungen 110 zugeordnet sind, befestigt werden können. In dieser Weise ist ein zügiges Wechseln der Messer 102 auch in Form von Messerbalken gewährleistet.

In Bezug auf sämtliche der oben erläuterten Ausführungsformen der Erfindung darf darauf hingewiesen werden, dass die Schere 100 in einer Warmbandstraße zur Erzeugung von flachgewalztem Stahl eingesetzt werden kann, und somit zum Schneiden von Bandmaterial bzw. Walzband dient. Gleichwohl kann die Schere 100 auch zum Schneiden von anderen Materialen eingesetzt werden.

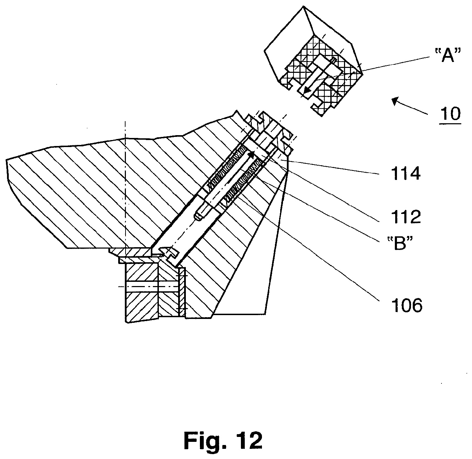

Fig. 12 zeigt eine Variante der Ausführungsform von Fig. 1, bei der die Vorrichtung 1 an dem Messerträger eines anderen Scherentyps angebracht werden kann, zwecks Lösen eines Messer wie vorstehend erläutert. Diese Ausführungsform eignet sich z.B. für Pendelscheren und Kurbelschere. Im Übrigen beruht das Funktionsprinzip dieser Ausführungsform jenem der Ausführungsform von Fig. 2, so dass zur Vermeidung von Wiederholungen hierauf verwiesen werden darf.

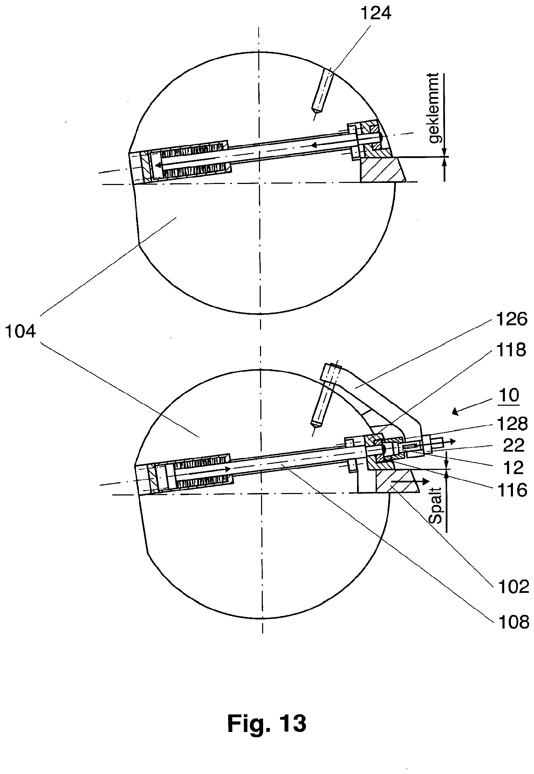

Fig. 13 zeigt eine Variante der Ausführungsform von Fig. 2, bei der die Vorrichtung 1 derart ausgebildet ist, dass von dem Stellorgan 10 der Vorrichtung 1 zur Aufhebung der Vorspannung der Zugstange 108 eine Zugkraft ausgeübt wird. Hierbei ist in der Messertrommel 104 ein Sackloch 124 (Fig. 13, Darstellung oben) ausgebildet, in das ein Lösebügel 128 (Fig. 13, Darstellung unten) eingebracht werden kann, an dem das Stellorgan 10 angebracht ist. Bei dieser Ausführungsform kann das Stellorgan eine Schraube 22 umfassen, die mit einem Betätigungsstift 12 zusammenwirkt. Der Bestätigungsstift 12 ist z.B. formschlüssig mit einem Zusatzelement 128 koppelbar, das z.B. über eine Bajonettverbindung mit der Schraube 116 der Zugstange 108, oder alternativ mit dem Klemmstück 118, verbunden werden kann. In dieser Weise kann bei Betätigung der Schraube 22 eine Zugkraft auf die Zugstange 108 aufgebracht werden, zwecks Lösen des Messers 102. An dieser Stelle darf darauf hingewiesen werden, dass bei dieser Ausführungsform das Stellorgan 10 alternativ auch in Form eines Hydraulikzylinders ausgebildet sein kann, wie z.B. bei der Ausführungsform von Fig. 2.

### Bezugszeichenliste

- 1: Vorrichtung
- 10: Stellorgan
- 11: Verbindungsstange
- 12: Betätigungsstift
- 14: Hydraulikzylinder
- 16: Kolben
- 20: formschlüssige Verbindungsstange
- 24: Stützplatte
- 28: Stellelement
- 30: erste Keilfläche
- 32: zweite Keilfläche
- 34: Aktuator
- 100: Schere
- 102: Messer
- 104: Messerträger
- 105: Außenseite
- 106: Kraftspeicher
- 108: Zugstange
- 110: Bohrung
- 112: Basiselement
- 114: Kontaktblock
- 122: formschlüssige Verbindungsstange
- 124: Sackloch
- 126: Lösebügel
- 128: Zusatzelement
- A: Wirkrichtung (axiale Richtung) des Kraftspeichers 106
- B: Wirkrichtung (axiale Richtung) des Stellorgans 10
- D: Achse quer zur Längsachse
- L: Längsachse

## Patentansprüche

1. Schere (100) insbesondere für Walzband mit zumindest einem auswechselbaren Messer (102), umfassend
zumindest einen Messerträger (104), an dem ein Messer (102) durch eine mittels eines Kraftspeichers (106) vorgespannte Zugstange (108), die in einer in dem Messerträger (104) ausgebildeten Bohrung (110) beweglich aufgenommen ist, selbsttätig festlegbar ist, und
eine Vorrichtung (1) zum Wechseln zumindest eines Messers (102) der Schere (100),die zumindest ein Stellorgan (10) umfasst, das zum Lösen des Messers (102) von dem Messerträger (104) derart betätigbar ist, dass dadurch die Zugstange (108) in axialer Richtung ("B") entgegengesetzt zu ihrer Vorspannung bewegt wird, wobei das zumindest eine Stellorgan (10) in Form eines Hydraulikzylinders (14) ausgebildet ist und einen Betätigungsstift (12) aufweist, der mit einem Kolben (16) des Hydraulikzylinders (14) verbunden ist und in Richtung einer Längsachse (L) der Zugstange (108) beweglich und mit einer Stirnseite der Zugstange (108) entweder unmittelbar oder mittelbar, vorzugsweise durch eine Verbindungsstange (11), in Kontaktanlage bringbar ist, **dadurch gekennzeichnet,**
**dass** das Stellorgan (10) in Form des Hydraulikzylinders (14) an einer Außenseite (105) des Messerträgers (104) oder außerhalb des Messerträgers (104) angeordnet ist.

2. Schere (100) nach Anspruch 1, **dadurch gekennzeichnet, dass** das zumindest eine Stellorgan (10) zur Durchführung eines Messerwechsels temporär an dem Messerträger (104) angebracht ist oder temporär mit dem Messerträger (104) mittels einer Verbindungsstange (11) in Wirkverbindung steht, wobei das Stellorgan (10) nach Beendigung des Messerwechsels von dem Messerträger (104) lösbar ist.

3. Schere (100) nach Anspruch 1 oder 2, **dadurch gekennzeichnet, dass** das zumindest eine Stellorgan (10) oder eine mit dem Stellorgan (10) in Wirkverbindung stehende Verbindungsstange (11) vorzugsweise formschlüssig (20, 122) an dem Messerträger (104) befestigbar ist.

4. Schere (100) nach einem der Ansprüche 1 bis 3, **dadurch gekennzeichnet, dass** zur Befestigung des Stellorgans (10) oder der Verbindungsstange (11) an dem Messerträger (104) ein Kontaktblock (114) vorgesehen ist.

5. Schere (100) nach Anspruch 4, **dadurch gekennzeichnet, dass** das zumindest eine Stellorgan (10) eine Schraube (22) umfasst, die mit einem Innengewinde einer Stützplatte (24), die an dem Kontaktblock (114) vorzugsweise formschlüssig (20, 122) befestigbar ist, in Eingriff bringbar ist.

6. Schere (100) nach einem der Ansprüche 1 bis 5, **dadurch gekennzeichnet, dass** das zumindest eine Stellorgan (10) ein Stellelement (28) mit einer ersten Keilfläche (30) aufweist, die mit einer der Zugstange (108) entgegengesetzten Stirnseite des Betätigungsstifts (12) unmittelbar oder mittels einer Verbindungsstange (11) zusammenwirkt, vorzugsweise, dass an der Stirnseite des Betätigungsstifts (12), welche der Zugstange (108) entgegengesetzt ist, eine zweite Keilfläche (32) ausgebildet ist, die zur ersten Keilfläche (30) komplementär ist.

7. Schere (100) nach Anspruch 6, **dadurch gekennzeichnet, dass** das Stellelement (28) durch Betätigung eines Aktuators (34) entlang einer Achse ("D") quer zur Längsachse (L) der Zugstange (108) bewegbar ist, um den Betätigungsstift (12) zum Lösen des Messers (102) in einer Wirkrichtung (B) entlang der Längsachse (L) der Zugstange (108) und gegen die Vorspannung des Kraftspeichers (106) zu bewegen.

8. Schere (100) nach einem der vorhergehenden Ansprüche, **gekennzeichnet durch** zumindest eine außenliegende Abstützung (122), an der das zumindest eine Stellorgan (10) angebracht ist, wobei das Stellorgan (10) mit der Zugstange (108), die in dem Messerträger (104) der Schere (100) aufgenommen ist, über eine Verbindungsstange (11) koppelbar ist, so dass eine Betätigung des Stellorgans (10) durch die Verbindungsstange (11) auf die Zugstange (108) übertragen wird, vorzugsweise, dass an der außenliegenden Abstützung (122) eine Mehrzahl von Stellorganen (10) angebracht sind, die jeweils über Verbindungsstangen (11) mit den in den Messerträgern (104) aufgenommenen Zugstangen (108) koppelbar sind.

9. Schere (100) nach einem der vorhergehenden Ansprüche, **gekennzeichnet durch** eine Mehrzahl von Stellorganen (10), die für ein längliches Messer (102) oder für einen Satz von mehreren Messern entlang einer Reihe an der Außenseite (105) des Messerträgers (104), vorzugsweise entlang der Mittenachse einer Messertrommel (104), angeordnet sind.

10. Schere (100) nach einem der vorhergehenden Ansprüche, **dadurch gekennzeichnet, dass** das Stellorgan (10) derart ausgebildet ist, dass auf die Zugstange (108) zur Aufhebung von deren Vorspannung eine Druckkraft ausübbar ist, um das Messer (102) von dem Messerträger (104) zu lösen, oder dass das Stellorgan (10) derart ausgebildet ist, dass auf die Zugstange (108) zur Aufhebung von deren Vorspannung eine Zugkraft ausübbar ist, um das Messer (102) von dem Messerträger (104) zu lösen.

11. Schere (100) nach einem der Ansprüche 1 bis 10, **dadurch gekennzeichnet, dass** der Messerträger (104) an seiner Außenseite (105) und in Verlängerung der Längsachse (L) der Zugstange (108) zumindest einen Kontaktblock (114) aufweist, an dem das Stellorgan (10) oder eine mit dem Stellorgan (10) koppelbare Verbindungsstange (11) vorzugsweise formschlüssig befestigbar sind.

12. Schere (100) nach einem der vorhergehenden Ansprüche, **dadurch gekennzeichnet, dass** die Schere (100) eine rotierende Schere (100) ist, wobei der Messerträger als Messertrommel (104) ausgebildet ist.

13. Schere (100) nach Anspruch 12, **dadurch gekennzeichnet, dass** an der Messertrommel (104) eine Mehrzahl von Messern (102) angebracht sind, wobei die den jeweiligen Messern (102) zugeordneten Zugstangen (108) in verschiedenen Winkeln zueinander verlaufen und die Bohrungen (110) in der Messertrommel (104) für die Zugstangen (108) jeweils versetzt eingebracht sind.

14. Schere (100) nach Anspruch 13, **dadurch gekennzeichnet, dass** an einer Messertrommel (104) zumindest zwei Messer (102) oder Messerpaare befestigt sind, wobei deren zugeordnete Zugstangen (108) innerhalb der Messertrommel parallel zueinander verlaufen, so dass die Messer (102) oder Messerpaare auf der Messertrommel (104) in einem Winkel, vorzugsweise in einem Winkel von 90° oder 180°, zueinander angeordnet sind.

## Claims

1. Shears (100), particularly for rolled strip, with at least one exchangeable blade (102), comprising
at least one blade carrier (104) to which a blade (102) is automatically securable by a tie rod (108) which is biased by means of a force store (106) and which is movably received in a bore (110) formed in the blade carrier (104), and
a device (1) for changing at least one blade (102) of the shears (100), the device comprising at least one setting unit (10) which for release of the blade (102) from the blade carrier (104) is actuable in such a way that the tie rod (108) is thereby moved in axial direction ("B") oppositely to its bias, wherein the at least one setting unit (10) is constructed in the form of a hydraulic cylinder (14) and comprises an actuating pin (12), which is connected with a piston (16) of the hydraulic cylinder (14) and movable in the direction of a longitudinal axis (L) of the tie rod (108) and which can be brought into contact with an end of the tie rod (108) either directly or indirectly, preferably by a connecting rod (11),
**characterised in that**
the setting unit (10) in the form of the hydraulic cylinder (14) is arranged at an outer side (105) of the blade carrier (104) or outside the blade carrier (104).

2. Shears (100) according to claim 1, **characterised in that** the at least one setting unit (10) for carrying out a blade change is temporarily mounted on the blade carrier (104) or is temporarily in operative connection with the blade carrier (104) by means of a connecting rod (11), wherein the setting unit (10) is detachable from the blade carrier (104) after the blade change has been concluded.

3. Shears (100) according to claim 1 or 2, **characterised in that** the at least one setting unit (10) or a connecting rod (11) in operative connection with the setting unit (10) is securable (20, 122) to the blade carrier (104) preferably mechanically positively.

4. Shears (100) according to any one of claims 1 to 3, **characterised in that** a contact block (114) is provided for securing the setting unit (10) or the connecting rod (11) to the blade carrier (104).

5. Shears (100) according to claim 4, **characterised in that** the at least one setting unit (10) comprises a screw (22) which can be brought into engagement with an internal thread of a support plate (24) which is securable to the contact block (114) preferably mechanically positively (20, 122).

6. Shears (100) according to any one of claims 1 to 5, **characterised in that** at least one setting unit (10) comprises a setting element (28) with a first wedge surface (30) which cooperates with an end, which is opposite the tie rod (108), of the actuating pin (12) directly or by means of a connecting rod (11), preferably **in that** a second wedge surface (32) complementary with the first wedge surface (30) is formed at the end of the actuating pin (12) opposite the tie rod (108).

7. Shears (100) according to claim 6, **characterised in that** the setting element (28) is movable along an axis ("D") transversely to the longitudinal axis (L) of the tie rod (108) by actuation of an actuator (34) so as to move the actuating pin (12) in an operative direction (B) along the longitudinal axis (L) of the tie rod (108) and against the bias of the force store (106) for release of the blade (102).

8. Shears (100) according to any one of the preceding claims, **characterised by** at least one outwardly disposed support (122) on which the at least one setting unit (10) is mounted, wherein the setting unit (10) can be coupled by way of a connecting rod (11) with the tie rod (108) received in the blade carrier (104) of the shears (100), so that actuation of the setting unit (10) is transmitted by the connecting rod (11) to the tie rod (108), preferably in that a plurality of setting units (10) which can be respectively coupled by way of connecting rods (11) with tie rods (108) received in the blade carrier (104) is mounted on the outwardly disposed support (122).

9. Shears (100) according to any one of the preceding claims, **characterised by** a plurality of setting units (10) which for an elongate blade (102) or for a set of several blades are arranged along a row at the outer side (105) of the blade carrier (104), preferably along the centre axis of a blade drum (104).

10. Shears (100) according to any one of the preceding claims, **characterised in that** the setting unit (10) is constructed in such a way that a pressure force can be exerted on the tie rod (108) for cancellation of the bias thereof so as to release the blade (102) from the blade carrier (104) or that the setting unit (10) is constructed in such a way that a tension force can be exerted on the tie rod (108) for cancellation of the bias thereof so as to release the blade (102) from the blade carrier (104).

11. Shears (100) according to any one of claims 1 to 10, **characterised in that** the blade carrier (104) has at its outer side (105) and in prolongation of the longitudinal axis (L) of the tie rod (108) at least one contact block (114) to which the setting unit (10) or a connecting rod (11) able to be coupled with the setting unit (10) is preferably mechanically positively securable.

12. Shears (100) according to any one of the preceding claims, **characterised in that** the shears (100) is a rotating shears (100), wherein the blade carrier is constructed as a blade drum (104).

13. Shears (100) according to claim 12, **characterised in that** a plurality of blades (102) is mounted on the blade drum (104), wherein the tie rods (108) associated with the respective blades (102) extend at different angles relative to one another and the bores (110) formed in the blade drum (104) for the tie rods (108) are respectively offset.

14. Shears (100) according to claim 13, **characterised in that** at least two blades (102) or blade pairs are secured to a blade drum (104), wherein the tie rods (108) associated therewith extend parallel to one another within the blade drum so that the blades (102) or blade pairs are arranged in the blade drum (104) at an angle, preferably an angle of 90° or 180°, relative to one another.

## Revendications

1. Cisaille (100), en particulier pour bandes laminées, avec au moins un couteau (102) interchangeable, comprenant
au moins un porte-couteau (104) sur lequel un couteau (102) peut être fixé automatiquement par une barre de traction (108) précontrainte au moyen d'un accumulateur de force (106), qui est logée de manière mobile dans un alésage (110) formé dans le porte-couteau (104), et
un dispositif (1) pour changer au moins un couteau (102) de la cisaille (100), qui comprend au moins un organe de réglage (10) qui peut être actionné pour détacher le couteau (102) du porte-couteau (104) de telle sorte que la barre de traction (108) est ainsi déplacée dans la direction axiale (« B ») dans le sens opposé à sa précontrainte, ledit au moins un organe de réglage (10) étant réalisé sous la forme d'un vérin hydraulique (14) et présentant une tige d'actionnement (12) qui est reliée à un piston (16) du vérin hydraulique (14) et est mobile dans la direction d'un axe longitudinal (L) de la barre de traction (108) et peut être amenée en contact avec une face frontale de la barre de traction (108) soit directement, soit indirectement, de préférence par l'intermédiaire d'une tige de liaison (11),
**caractérisé en ce que,**
l'organe de réglage (10) sous la forme du vérin hydraulique (14) est disposé sur une face extérieure (105) du porte-couteau (104) ou à l'extérieur du porte-couteau (104).

2. Cisaille (100) selon la revendication 1, **caractérisée en ce que** ledit au moins un organe de réglage (10) est monté temporairement sur le porte-couteau (104) pour effectuer un changement de couteau ou est temporairement en liaison active avec le porte-couteau (104) au moyen d'une tige de liaison (11), l'organe de réglage (10) pouvant être détaché du porte-couteau (104) une fois le changement de couteau terminé.

3. Cisaille (100) selon la revendication 1 ou 2, **caractérisée en ce que** ledit au moins un organe de réglage (10) ou une tige de liaison (11) en liaison active avec l'organe de réglage (10) peut être fixée sur le porte-couteau (104), de préférence par complémentarité de formes (20, 122).

4. Cisaille (100) selon l'une des revendications 1 à 3, **caractérisée en ce qu'**un bloc de contact (114) est prévu pour fixer l'organe de réglage (10) ou la tige de liaison (11) sur le porte-couteau (104).

5. Cisaille (100) selon la revendication 4, **caractérisée en ce que** ledit au moins un organe de réglage (10) comprend une vis (22) qui peut être mise en prise avec un filetage intérieur d'une plaque d'appui (24) qui peut être fixée sur le bloc de contact (114), de préférence par complémentarité de formes (20, 122).

6. Cisaille (100) selon l'une des revendications 1 à 5, **caractérisée en ce que** ledit au moins un organe de réglage (10) présente un élément de réglage (28) avec une première surface en coin (30) qui coopère avec une face frontale de la tige d'actionnement (12) opposée à la tige de traction (108), directement ou au moyen d'une tige de liaison (11), de préférence **en ce que** sur la face frontale de la tige d'actionnement (12), qui est opposée à la tige de traction (108), est formée une seconde surface en coin (32), qui est complémentaire à la première surface en coin (30).

7. Cisaille (100) selon la revendication 6, **caractérisée en ce que** l'élément de réglage (28) peut être déplacé par l'actionnement d'un actionneur (34) le long d'un axe (« D ») transversal à l'axe longitudinal (L) de la tige de traction (108), afin de déplacer la tige d'actionnement (12) pour libérer le couteau (102) dans une direction d'action (B) le long de l'axe longitudinal (L) de la tige de traction (108) et contre la précontrainte de l'accumulateur d'énergie (106).

8. Cisaille (100) selon l'une quelconque des revendications précédentes, **caractérisée par** au moins un support extérieur (122) sur lequel est monté ledit au moins un organe de réglage (10), l'organe de réglage (10) pouvant être couplé à la tige de traction (108), qui est logée dans le porte-couteau (104) de la cisaille (100), par l'intermédiaire d'une tige de liaison (11), de sorte qu'un actionnement de l'organe de réglage (10) est transmis à la tige de traction (108) par la tige de liaison (11), de préférence en ce qu'une pluralité d'organes de réglage (10) sont montés sur le support extérieur (122), qui peuvent être couplés respectivement par des tiges de liaison (11) aux tiges de traction (108) logées dans les porte-couteaux (104).

9. Cisaille (100) selon l'une des revendications précédentes, **caractérisée par** une pluralité d'organes de réglage (10) qui sont disposés pour un couteau allongé (102) ou pour un jeu de plusieurs couteaux le long d'une rangée sur le côté extérieur (105) du porte-couteau (104), de préférence le long de l'axe central d'un tambour à couteaux (104).

10. Cisaille (100) selon l'une des revendications précédentes, **caractérisée en ce que** l'organe de réglage (10) est conçu de telle sorte qu'une force de pression peut être exercée sur la tige de traction (108) pour supprimer sa précontrainte et libérer le couteau (102) du porte-couteau (104), ou **en ce que** l'organe de réglage (10) est conçu de telle sorte qu'une force de traction peut être exercée sur la tige de traction (108) pour supprimer sa précontrainte et libérer le couteau (102) du porte-couteau (104).

11. Cisaille (100) selon l'une des revendications 1 à 10, **caractérisée en ce que** le porte-couteau (104) présente sur sa face extérieure (105) et dans le prolongement de l'axe longitudinal (L) de la tige de traction (108) au moins un bloc de contact (114) sur lequel l'organe de réglage (10) ou une tige de liaison (11) pouvant être couplée à l'organe de réglage (10) peuvent être fixés, de préférence par complémentarité de formes.

12. Cisaille (100) selon l'une des revendications précédentes, **caractérisée en ce que** la cisaille (100) est une cisaille rotative (100), le porte-couteau étant conçu comme un tambour à couteaux (104).

13. Cisaille (100) selon la revendication 12, **caractérisée en ce qu'**une pluralité de couteaux (102) sont montés sur le tambour à couteaux (104), les tiges de traction (108) associées aux couteaux (102) respectifs s'étendant selon des angles différents les uns par rapport aux autres et les alésages (110) dans le tambour à couteaux (104) pour les tiges de traction (108) étant respectivement décalés.

14. Cisaille (100) selon la revendication 13, **caractérisée en ce qu'**au moins deux couteaux (102) ou paires de couteaux sont fixés sur un tambour à couteaux (104), leurs tiges de traction (108) associées s'étendant parallèlement l'une à l'autre à l'intérieur du tambour à couteaux, de sorte que les couteaux (102) ou les paires de couteaux sont disposés sur le tambour à couteaux (104) selon un angle les uns par rapport aux autres, de préférence selon un angle de 90° ou 180°.
